# EUROPEAN PATENT APPLICATION

(11) **EP 4 451 399 A1**
(43) Date of publication of application: **23.10.2024**
(21) Application number: 22905494.5
(22) Date of filing: 15.11.2022
(51) Int. Cl.: H01M 10/052, H01M 10/0562, H01M 10/0585

(54) **LITHIUM SECONDARY BATTERY**

(30) Priority: 14.12.2021 JP 2021202389
(71) Applicant: NISSAN MOTOR CO., LTD., Kanagawa 221-0023 (JP); Renault s.a.s, 92100 Boulogne Billancourt (FR)
(72) Inventor: YOSHINO, Kazuhiro, Atsugi-shi, Kanagawa 243-0123 (JP); SAITO, Naoto, Atsugi-shi, Kanagawa 243-0123 (JP); TAKADA, Harumi, Atsugi-shi, Kanagawa 243-0123 (JP)
(74) Representative: Grünecker Patent- und Rechtsanwälte PartG mbB
(86) International application number: PCT/IB2022/000634
(87) International publication number: WO 2023/111680

(57) **Abstract**

Provided is a means capable of more reliably suppressing growth of dendrites in a lithium-precipitation type lithium secondary battery.

In a lithium secondary battery including a lithium-precipitation type power-generating element, an ion conductive reaction suppressing layer that has lithium ion conductivity and suppresses reaction between lithium metal and a solid electrolyte is provided on a region where a positive electrode active material layer faces the negative electrode current collector, which is on a negative electrode current collector side of a surface of a solid electrolyte layer facing the negative electrode current collector, and an ion permeation suppressing layer that suppresses permeation of lithium ions is provided so as to be adjacent to at least a portion of the perimeter of the solid electrolyte layer.

## Description

### TECHNICAL FIELD

The present invention relates to a lithium secondary battery.

### BACKGROUND ART

In recent years, research and development on an all-solid lithium secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium secondary battery, in principle, various problems caused by combustible organic electrolyte solution do not occur unlike the conventional liquid-based lithium ion secondary battery. In general, use of a high-potential and large-capacity positive electrode material and a large-capacity negative electrode material can achieve significant improvement in output density and energy density of a battery.

Conventionally, as one type of all-solid-state lithium secondary batteries, a so-called lithium-precipitation type in which lithium metal is precipitated on a negative electrode current collector in a charging process is known (see, e.g., U.S. Patent Application Publication No. 2019/0157723). In the charging process of such a lithium-precipitation type all-solid-state lithium secondary battery, lithium metal is precipitated between the solid electrolyte layer and the negative electrode current collector. U.S. Patent Application Publication No. 2019/0157723 discloses a technique in which a fine particle layer including fine particles of amorphous carbon, silicon, silver, tin, aluminum, bismuth, or the like is disposed between a negative electrode current collector and a solid electrolyte layer constituting a power-generating element of a lithium secondary battery. According to U.S. Patent Application Publication No. 2019/0157723, by adopting such a configuration, when lithium metal is precipitated between the fine particle layer and the negative electrode current collector during charging, the fine particle layer serves as a protective layer for the lithium metal layer, and growth of dendrites from the lithium metal layer is suppressed, so that a short circuit of the lithium secondary battery, a decrease in capacity due to the short circuit, and the like are prevented.

### SUMMARY OF INVENTION

### Technical Problem

However, according to the study of the present inventors, it has been found that even when the technique described in U.S. Patent Application Publication No. 2019/0157723 is used, it is still impossible to prevent the growth of dendrites in some cases.

Therefore, an object of the present invention is to provide a means capable of more reliably suppressing the growth of dendrites in a lithium-precipitation type lithium secondary battery.

### Solution to Problem

The present inventors have conducted intensive studies in order to solve the above problem. As a result, the present inventors have found that the above problem can be solved by a lithium secondary battery including a lithium-precipitation type power-generating element, in which an ion conductive reaction suppressing layer that has lithium ion conductivity and suppresses reaction between lithium metal and a solid electrolyte is provided on a region where a positive electrode active material layer faces the negative electrode current collector, which is on a negative electrode current collector side of a surface of a solid electrolyte layer facing the negative electrode current collector, and an ion permeation suppressing layer that suppresses permeation of lithium ions is provided so as to be adjacent to at least a part of the perimeter of the solid electrolyte layer, and have arrived at the present invention.

That is, one aspect of the present invention relates to a lithium secondary battery including a power-generating element having: a positive electrode in which a positive electrode active material layer containing a positive electrode active material capable of occluding and releasing lithium ions is disposed on a surface of a positive electrode current collector; a negative electrode that has a negative electrode current collector and in which lithium metal is precipitated on the negative electrode current collector during charging; and a solid electrolyte layer that is interposed between the positive electrode and the negative electrode and contains a solid electrolyte. The lithium secondary battery is characterized in that an ion conductive reaction suppressing layer that has lithium ion conductivity and suppresses reaction between the lithium metal and the solid electrolyte is provided on at least a part of a region where the positive electrode active material layer faces the negative electrode current collector on a main surface of the solid electrolyte layer facing the negative electrode current collector, and an ion permeation suppressing layer that suppresses permeation of lithium ions is provided so as to be adjacent to at least a part of the perimeter of the solid electrolyte layer.

### Effect of Invention

According to the present invention, the growth of dendrites in a lithium-precipitation type lithium secondary battery is more reliably suppressed.

### BRIEF DESCRIPTION OF DRAWINGS

FIG. 1 is a cross-sectional view schematically illustrating an overall structure of a laminate type (internal parallel connection type) all-solid lithium secondary battery (laminate type secondary battery) as one embodiment of the present invention.
FIG. 2 is an enlarged cross-sectional view of a single battery layer of the laminate type secondary battery according to one embodiment of the present invention. FIG. 2 corresponds to a configuration of an evaluation cell produced in Example 1 to be described later.
Fig. 3 is a perspective view of a laminated secondary battery according to one embodiment of the present invention.
Fig. 4 is a side view as viewed from direction A illustrated in Fig. 3.
Fig. 5 is a perspective view illustrating an appearance of a laminated secondary battery according to one embodiment of the present invention.
Fig. 6 is an enlarged cross-sectional view of a single battery layer of a laminate type secondary battery according to another embodiment of the present invention. Fig. 6 corresponds to the configuration of an evaluation cell produced in Example 2 described later.
Fig. 7 is an enlarged cross-sectional view of a single battery layer of a laminate type secondary battery according to still another embodiment of the present invention. Fig. 7 corresponds to the configuration of an evaluation cell produced in Example 3 described later.
Fig. 8 is an enlarged cross-sectional view of a single battery layer of a laminate type secondary battery according to still another embodiment of the present invention. Fig. 8 corresponds to the configuration of an evaluation cell produced in Example 4 described later.
Fig. 9 is an enlarged cross-sectional view of a single battery layer of a laminate type secondary battery according to still another embodiment of the present invention.
Fig. 10 is an enlarged cross-sectional view of a single battery layer of a laminate type secondary battery according to still another embodiment of the present invention.
Fig. 11 is an enlarged cross-sectional view of a single battery layer of a laminate type secondary battery according to still another embodiment of the present invention.
Fig. 12 is an enlarged cross-sectional view of a single battery layer of a laminate type secondary battery according to still another embodiment of the present invention.
Fig. 13 is an enlarged cross-sectional view of a single battery layer of a laminate type secondary battery according to still another embodiment of the present invention.
Fig. 14 is an enlarged cross-sectional view of a single battery layer of a laminate type secondary battery according to still another embodiment of the present invention.
Fig. 15 is an enlarged cross-sectional view of a single battery layer of a laminate type secondary battery according to still another embodiment of the present invention.
Fig. 16 is an enlarged cross-sectional view of a single battery layer of a laminate type secondary battery according to still another embodiment of the present invention.
Fig. 17 is an enlarged cross-sectional view of a single battery layer of a laminate type secondary battery according to still another embodiment of the present invention.
Fig. 18 is an enlarged cross-sectional view of a single battery layer of a laminate type secondary battery corresponding to the configuration of an evaluation cell produced in Comparative Example 3.

### DESCRIPTION OF EMBODIMENTS

Hereinafter, the present aspect will be described with reference to the drawings, but the technical scope of the present invention should be determined based on the description of the claims, and is not limited to the following embodiments. The dimensional ratios of the drawings are exaggerated for convenience of description and may differ from the actual ratios.

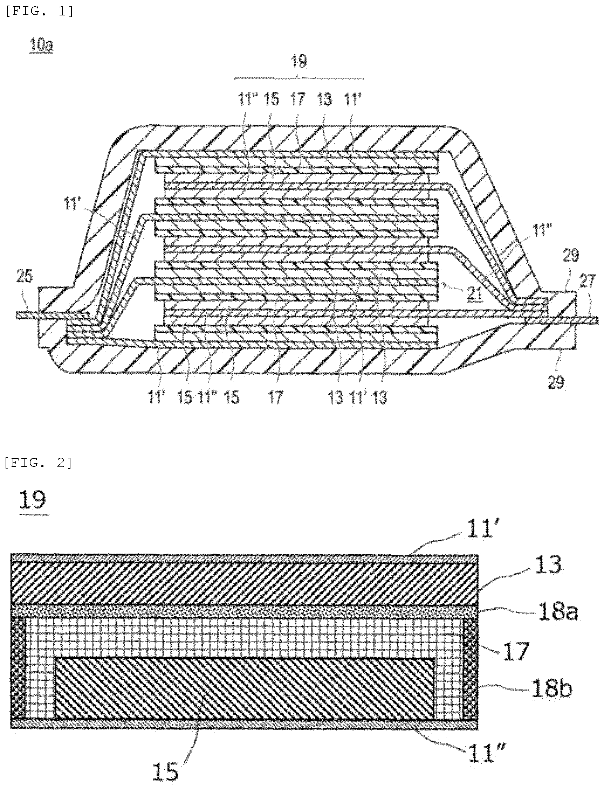

FIG. 1 is a cross-sectional view schematically illustrating an overall structure of a laminate type (internal parallel connection type) all-solid lithium secondary battery (hereinafter also simply referred to as "laminate type secondary battery") as one embodiment of the present invention. A laminate type secondary battery 10a illustrated in FIG. 1 has a structure in which a substantially rectangular shaped power-generating element 21 in which a charge and discharge reaction actually proceeds is sealed inside a laminate film 29 as the battery outer casing body. FIG. 1 shows a cross section of the laminate type secondary battery during charging, and thus a negative electrode active material layer 13 made of lithium metal is present between a negative electrode current collector 11' and a solid electrolyte layer 17. The pressurizing member (not illustrated) applies a confining pressure to the laminate type secondary battery 10a in the direction of lamination of the power-generating element 21. Accordingly, the volume of the power-generating element 21 is kept constant.

As illustrated in FIG. 1, the power-generating element 21 of the laminate type secondary battery 10a of the present aspect has a configuration in which a negative electrode where the negative electrode active material layer 13 containing lithium metal is disposed on both surfaces of the negative electrode current collector 11', a solid electrolyte layer 17, and a positive electrode where a positive electrode active material layer 15 containing a lithium transition metal composite oxide is disposed on both surfaces of a positive electrode current collector 11" are laminated. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thus, the negative electrode, solid electrolyte layer, and positive electrode that are adjacent constitute one single battery layer 19. Therefore, it can be said that the laminate type secondary battery 10a illustrated in FIG. 1 has a configuration in which a plurality of single battery layers 19 is laminated to be electrically connected in parallel.

The negative electrode current collector 11' and the positive electrode current collector 11" have a structure in which a negative electrode current collecting plate 25 and a positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between ends of the laminate film 29. The negative electrode current collecting plate 25 and the positive electrode current collecting plate 27 may be attached to the negative electrode current collector 11' and the positive electrode current collector 11" of the respective electrodes with a negative electrode terminal lead and a positive electrode terminal lead (not illustrated) interposed therebetween, respectively by ultrasonic welding, resistance welding, or the like as necessary.

FIG. 2 is an enlarged cross-sectional view of the single battery layer 19 of the laminate type secondary battery according to one embodiment of the present invention. As illustrated in FIG. 2, the single battery layer 19 constituting the laminate type secondary battery 10a according to the present embodiment has a positive electrode including the positive electrode current collector 11" and the positive electrode active material layer 15 disposed on the surface of the positive electrode current collector 11". Further, the solid electrolyte layer 17 containing a solid electrolyte is disposed on the surface of the positive electrode active material layer 15 on a side opposite to the positive electrode current collector 11". Further, in the embodiment shown in Fig. 2, the solid electrolyte layer 17 extends to reach the positive electrode current collector 11" so as to cover the entire perimeter of the positive electrode active material layer 15. Then, in the embodiment shown in Fig. 2, a carbon black layer 18a containing carbon black nanoparticles is provided on a region including the entire region of the positive electrode active material layer 15 facing the negative electrode current collector 11' on a main surface of the solid electrolyte layer 17 facing the negative electrode current collector 11' (in other words, in a size larger than the positive electrode active material layer 15 when the power-generating element 21 is viewed in a plan view). Since the carbon black constituting the carbon black layer 18a has lithium ion conductivity, the carbon black layer 18a can conduct lithium ions. Therefore, the disposition of the carbon black layer 18a does not hinder the progress of the battery reaction. The carbon black layer 18a also has a function of suppressing a reaction between lithium metal (negative electrode active material layer 13) precipitated on the negative electrode current collector 11' during charging and the solid electrolyte contained in the solid electrolyte layer 17. Therefore, it can be said that the carbon black layer 18a functions as an ion conductive reaction suppressing layer.

As shown in Fig. 2, in the single battery layer 19 constituting the laminated secondary battery 10a according to the present embodiment, an alumina layer 18b containing alumina (aluminum oxide) nanoparticles is provided on the entire outer periphery of the solid electrolyte layer 17. Alumina constituting the alumina layer 18b is a material having no lithium ion conductivity. Therefore, the alumina layer 18b functions as an ion permeation suppressing layer that suppresses permeation of lithium ions. As shown in Fig. 2, when the solid electrolyte layer 17 extends so as to cover the perimeter of the positive electrode active material layer 15, and an alumina layer (ion-permeation suppressing layer) is provided adjacent to the perimeter of the solid electrolyte layer 17 extending as described above, the QC performance of the battery obtained can be further improved. This is because the solid electrolyte layer 17 is present extending to the perimeter of the positive electrode active material layer 15 and thus serves as a physical barrier, and in addition, the alumina layer (ion-permeation suppressing layer) has higher adhesion to the solid electrolyte layer 17 than the positive electrode active material layer 15, so that growth of dendrite and a short circuit caused thereby can be more effectively prevented.

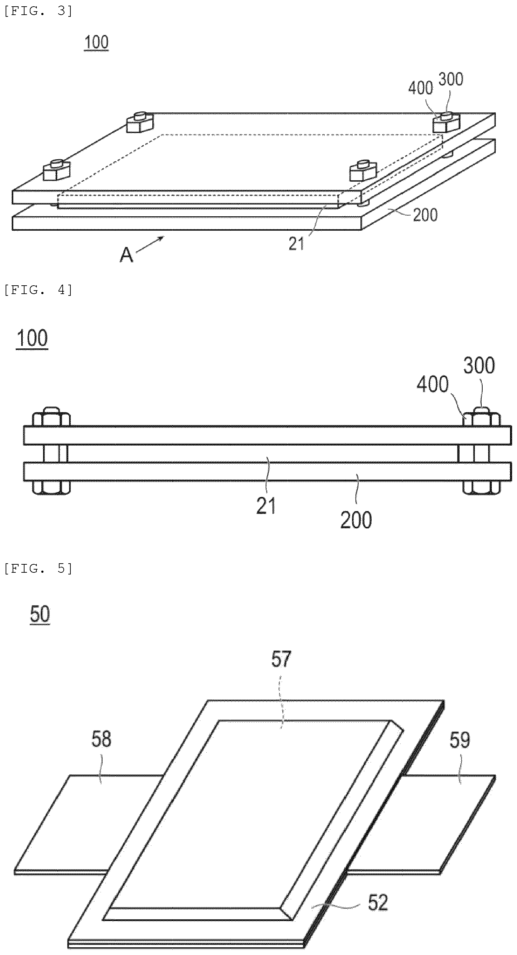

Fig. 3 is a perspective view of a laminated secondary battery according to one embodiment of the present invention. Fig. 4 is a side view as viewed from direction A illustrated in Fig. 3. As illustrated in FIGS. 3 and 4, a laminate type secondary battery 100 according to the present embodiment includes the laminate type secondary battery 10a illustrated in Fig. 1, two metal plates 200 sandwiching the laminate type secondary battery 10a, and bolts 300 and nuts 400 as fastening members. The fastening members (the bolts 300 and the nuts 400) have a function of fixing the laminate type secondary battery 10a in a state of being sandwiched by the metal plates 200. As a result, the metal plates 200 and the fastening members (the bolts 300 and the nuts 400) function as a pressurizing member that pressurizes (confines) a laminate type secondary battery 10a in a direction of lamination of the laminate type secondary battery 10a. The pressurizing member is not particularly limited as long as the pressurizing member can pressurize the laminate type secondary battery 10a in the direction of lamination of the power-generating element. Typically, a combination of plates formed of a material having rigidity such as the metal plates 200 and the above-described fastening members is used as the pressurizing member. In addition to the bolts 300 and the nuts 400, a tension plate that fixes the end of the metal plate 200 so as to confine the laminate type secondary battery 10a in the direction of lamination of the laminate type secondary battery 10a, or the like may be used as a fastening member.

The lower limit of the load applied to the laminate type secondary battery 10a (confining pressure in the direction of lamination of the laminate type secondary battery) is, for example, 0.1 MPa or more, preferably 1 MPa or more, more preferably 3 MPa or more, and still more preferably 5 MPa or more. The upper limit of the confining pressure in the direction of lamination of the laminate type secondary battery is, for example, 100 MPa or less, preferably 70 MPa or less, more preferably 40 MPa or less, and still more preferably 10 MPa or less.

Hereinafter, main components of the laminate type secondary battery 10a described above will be described.

### [Positive Electrode Current Collector]

The material constituting the positive electrode current collector is not particularly limited. As a constituent material of the positive electrode current collector, for example, a metal or a resin having an electrical conduction property (such as a resin obtained by adding a conductive filler to a non-conductive polymer material) can be adopted.

The current collector may have a single-layer structure made of a single material, or may have a laminated structure in which layers made of these materials are appropriately combined. From the viewpoint of weight reduction of the current collector, it is preferable to include at least a conductive resin layer made of a resin having an electrical conduction property. In addition, from the viewpoint of blocking the movement of lithium ions between single battery layers, a metal layer may be provided on a part of the current collector. The thickness of the positive electrode current collector is not particularly limited, but is, for example, from 10 to 100 µm.

### [Positive Electrode Active Material Layer]

A positive electrode constituting the lithium secondary battery according to the present aspect has a positive electrode active material layer containing a positive electrode active material capable of absorbing and desorbing lithium ions. The positive electrode active material layer 15 is disposed on the surface of the positive electrode current collector 11" as illustrated in FIG. 1.

The positive electrode active material is not particularly limited as long as it is a material capable of releasing lithium ions in the charging process of the secondary battery and occluding lithium ions in the discharging process. An example of such a positive electrode active material includes a material, which contains M1 element and O element, and in which the M1 element is at least one element selected from the group consisting of Li, Mn, Ni, Co, Cr, Fe, and P. Examples of such a positive electrode active material include layered rock salt-type active materials such as LiCoO₂, LiMnO₂, LiNiO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Further, examples of an oxide active material other than those described above include Li₄Ti₅O₁₂ and LiVO₂. In some cases, two or more kinds of positive electrode active materials may be used in combination. It is needless to say that a positive electrode active material other than those described above may be used. In a preferred embodiment, the positive electrode active material layer 15 constituting the lithium secondary battery according to the present aspect contains a layered rock salt-type active material (for example, Li(Ni-Mn-Co)O₂) containing lithium and cobalt as the positive electrode active material from the viewpoint of output characteristics.

The content of the positive electrode active material in the positive electrode active material layer is not particularly limited, but for example, is preferably within a range of 30 to 99 mass , more preferably within a range of 40 to 90 mass , and still more preferably within a range of 45 to 80 mass .

In the lithium secondary battery according to the present aspect, it is preferable that the positive electrode active material layer 15 further contains a solid electrolyte. Examples of the solid electrolyte include a sulfide solid electrolyte and an oxide solid electrolyte. In a preferred embodiment of the secondary battery according to the present aspect, the solid electrolyte is preferably a sulfide solid electrolyte containing an S element, more preferably a sulfide solid electrolyte containing a Li element, an M element, and an S element, the M element is a sulfide solid electrolyte containing at least one element selected from the group consisting of P, Si, Ge, Sn, Ti, Zr, Nb, Al, Sb, Br, Cl, and I, and still more preferably a sulfide solid electrolyte containing an S element, a Li element, and a P element, from the viewpoint of exhibiting excellent lithium ion conductivity and following the volume change of the electrode active material associated with charging and discharging.

The content of the solid electrolyte in the positive electrode active material layer is not particularly limited, but is, for example, preferably within a range of 1 to 70 mass , more preferably within a range of 10 to 60 mass , and still more preferably within a range of 20 to 55 mass%.

### (Conductive aid and binder)

The positive electrode active material layer may further contain at least one of a conductive aid and a binder in addition to the positive electrode active material and the solid electrolyte.

The thickness of the positive electrode active material layer varies depending on the configuration of the intended lithium secondary battery, but is, for example, preferably within the range of 0.1 to 1000 µm, and more preferably within a range of 40 to 100 µm.

### [Solid Electrolyte Layer]

The solid electrolyte layer is a layer usually interposed between the positive electrode active material layer and the negative electrode current collector when fully discharged, and contains a solid electrolyte (usually as a main component). Since the specific form of the solid electrolyte contained in the solid electrolyte layer is the same as that described above, the detailed description thereof is omitted here. The content of the solid electrolyte in the solid electrolyte layer is preferably, for example, within a range of 10 to 100 mass , more preferably within a range of 50 to 100 mass , and still more preferably within a range of 90 to 100 mass% with respect to the total mass of the solid electrolyte layer.

The solid electrolyte layer may further contain a binder in addition to the solid electrolyte described above. The thickness of the solid electrolyte layer varies depending on the configuration of the intended lithium secondary battery, but is, for example, preferably within a range of 0.1 to 1000 µm, and more preferably within a range of 10 to 40 µm.

### [Negative Electrode Current Collector]

The negative electrode current collector is a conductive member that functions as a flow path for electrons emitted from a negative electrode toward a power source or flowing from an external load toward the negative electrode with the progression of the battery reaction (charge and discharge reaction). A material constituting the negative electrode current collector is not particularly limited. As the material constituting the negative electrode current collector, for example, a metal or a resin having conductivity can be adopted. The thickness of the negative electrode current collector is not particularly limited, but is, for example, from 10 to 100 µm.

### [Negative Electrode Active Material Layer]

The lithium secondary battery according to the present aspect is a so-called lithium-deposition-type lithium secondary battery in which lithium metal is deposited on a negative electrode current collector in a charging process. A layer made of the lithium metal deposited on the negative electrode current collector in this charging process is a negative electrode active material layer of the lithium secondary battery according to the present aspect. Therefore, the thickness of the negative electrode active material layer increases with the progress of the charging process, and the thickness of the negative electrode active material layer decreases with the progress of the discharging process. The negative electrode active material layer need not be present when the battery has been completely discharged. However, in some cases, a negative electrode active material layer made of a certain amount of lithium metal may be disposed when the battery has been completely discharged. The thickness of the negative electrode active material layer (lithium metal layer) when the battery has been completely discharged is not particularly limited, but is usually from 0.1 to 1000 µm.

### [Ion conductive reaction suppressing layer]

The lithium secondary battery according to the present aspect is characterized in that an ion conductive reaction suppressing layer is provided on at least a part of the region where the positive electrode active material layer faces the negative electrode current collector on the main surface of the solid electrolyte layer facing the negative electrode current collector. The ion conductive reaction suppressing layer is a layer that has lithium ion conductivity and suppresses a reaction between a lithium metal (negative electrode active material layer) and a solid electrolyte. Therefore, by providing the ion conductive reaction suppressing layer, it is possible to prevent deterioration of the solid electrolyte and a decrease in battery capacity caused by a reaction between the lithium metal (negative electrode active material layer) and the solid electrolyte without hindering the progress of the battery reaction.

Here, the phrase a material "has lithium ion conductivity" means that the lithium ion conductivity of the material at 25°C is 1 × 10⁻⁴ [S/cm] or more. On the other hand, the phrase a material "has no lithium ion conductivity" means that the lithium ion conductivity of the material at 25°C is less than 1 × 10⁻⁴ [S/cm]. In the lithium secondary battery according to the present aspect, the lithium ion conductivity at 25°C of the constituent material of the ion conductive reaction suppressing layer is 1 × 10⁻⁴ [S/cm] or more, preferably 1.5 × 10⁻⁴ [S/cm] or more, more preferably 2.0 × 10⁻⁴ [S/cm] or more, still more preferably 2.5 × 10⁻⁴ [S/cm] or more, and particularly preferably 3.0 × 10⁻⁴ [S/cm] or more.

The constituent material of the ion conductive reaction suppressing layer is not particularly limited, and various materials capable of expressing the above-described function can be employed. Examples of the constituent material of the ion conductive reaction suppressing layer include nanoparticles having lithium ion conductivity (in the present description, nanoparticles as a constituent material of the ion conductive reaction suppressing layer are also simply referred to as "first nanoparticles"). When the ion conductive reaction suppressing layer contains the first nanoparticles, a lithium secondary battery having a particularly excellent function of the ion conductive reaction suppressing layer can be provided. Here, the "nanoparticles" mean particles having an average particle diameter on a scale of nanometers (nm). The "average particle diameter" of nanoparticles refers to a 50% cumulative diameter (D50) with respect to a particle diameter (longest distance among distances between any two points on the contour line of the observed particle) measured by observing a cross section of a layer containing nanoparticles with a scanning electron microscope (SEM). The average particle diameter of the first nanoparticles is preferably 500 nm or less, more preferably 300 nm or less, still more preferably 150 nm or less, particularly preferably 100 nm or less, and most preferably 60 nm or less. In particular, when the average particle diameter of the first nanoparticles is 60 nm or less, a lithium secondary battery particularly excellent in the effect of suppressing the growth of dendrites can be provided. The lower limit of the average particle diameter of the first nanoparticles is not particularly limited, and is usually 10 nm or more, and preferably 20 nm or more.

Such first nanoparticles preferably contain, for example, one or two or more elements selected from the group consisting of carbon, gold, platinum, palladium, silicon, silver, aluminum, bismuth, tin, and zinc, and more preferably contain one or two or more of simple substances or alloys of these elements, from the viewpoint of being particularly excellent in the function as the ion conductive reaction suppressing layer. In addition, the first nanoparticles preferably contain carbon, and more preferably consist of a simple substance of carbon. Examples of the material composed of a simple substance of carbon include acetylene black, Vulcan (registered trademark), Black Pearl (registered trademark), carbon nanofiber, Ketjen Black (registered trademark), carbon nanotube, carbon nanohorn, carbon nanoballoon, and fullerene, and the like. Note that in a case where the ion conductive reaction suppressing layer contains such nanoparticles, the layer may further contain a binder.

The method for forming the ion conductive reaction suppressing layer containing the first nanoparticles as described above on the surface of the solid electrolyte layer on the negative electrode current collector side is not particularly limited, and for example, a method can be adopted in which a slurry in which the nanoparticles and a binder as necessary are dispersed in an appropriate solvent is applied to the surface of the solid electrolyte layer on the negative electrode current collector side, and the solvent is dried. Further, the ion-conductive reaction-suppressing layer may be formed by bonding a coating film obtained by applying the slurry to the surface of a support such as stainless foil and drying the solvent to the surface of the solid electrolyte layer on the negative electrode current collector side using a technique such as hydrostatic pressing, and then peeling the support therefrom. Note that, in some cases, a continuous layer containing any of the above-described materials may be formed by a method such as sputtering or the like instead of the form of nanoparticles to form the ion conductive reaction suppressing layer.

The first nanoparticles as the constituent material of the ion conductive reaction suppressing layer have been described above. Further, the ion conductive reaction suppressing layer may be composed of other constituent materials. Examples of other constituent materials include one or two or more lithium-containing compounds selected from the group consisting of lithium halide (lithium fluoride (LiF), lithium chloride (LiCl), lithium bromide (LiBr), lithium iodide (LiI)), a composite metal oxide represented by Li-M-O (M is one or two or more metal elements selected from the group consisting of Mg, Au, Al, Sn, and Zn), and a Li-Ba-TiO₃ composite oxide. All of these materials are more stable in reductive decomposition due to contact with lithium metal than the solid electrolyte. That is, when the tendency of the solid electrolyte constituting the solid electrolyte layer to undergo reductive decomposition due to contact with lithium metal is compared with the tendency of the lithium-containing compound as the constituent material of the ion conductive reaction suppressing layer to undergo reductive decomposition due to contact with lithium metal, the latter tendency is smaller. Therefore, the lithium-containing compound can also function as an ion conductive reaction suppressing layer. The method for forming the ion conductive reaction suppressing layer containing such a lithium-containing compound is also not particularly limited, and for example, a continuous layer containing the above-described lithium-containing compound can be formed by a method such as sputtering or the like to form the ion conductive reaction suppressing layer.

The average thickness of the ion conductive reaction suppressing layer is not particularly limited, and the ion conductive reaction suppressing layer may be disposed at a thickness capable of exerting the above-described function. However, when the average thickness of the ion conductive reaction suppressing layer is too large, the internal resistance is increased, which is a factor that reduces charge and discharge efficiency. Therefore, the average thickness of the ion conductive reaction suppressing layer is preferably smaller than the average thickness of the solid electrolyte layer. When the average thickness of the ion conductive reaction suppressing layer is too small, there is a possibility that the reaction suppressing effect by providing the ion conductive reaction suppressing layer cannot be sufficiently obtained. From these viewpoints, when the ion conductive reaction suppressing layer is a layer containing the first nanoparticles, the average thickness of the ion conductive reaction suppressing layer is preferably 300 nm to 20 um inclusive, more preferably 500 nm to 15 um inclusive, and still more preferably 1 um to 10 um inclusive. When the layer is a continuous layer made of a lithium-containing compound or the like formed by a method such as sputtering or the like, the thickness is preferably 0.5 nm to 20 nm inclusive. Note that, the "average thickness" of the ion conductive reaction suppressing layer means a value calculated as an arithmetic average value of the thicknesses measured respectively at several to several tens of different portions of the ion conductive reaction suppressing layer constituting the lithium secondary battery.

### [Ion-permeation suppressing layer]

The lithium secondary battery according to the present aspect is also characterized in that an ion-permeation suppressing layer is provided on at least a part of the perimeter of the solid electrolyte layer as shown in Fig. 2. The ion-permeation suppressing layer is a layer that suppresses permeation of lithium ions. Therefore, by providing the ion-permeation suppressing layer, even when dendrite is generated from lithium metal of the negative electrode active material layer 13, it is possible to effectively prevent occurrence of a short circuit due to growth of the dendrite bypassing the perimeter of the solid electrolyte layer 17.

The constituent material of the ion permeation suppressing layer is not particularly limited, and various materials capable of expressing the above-described function can be adopted. The constituent material of the ion permeation suppressing layer is preferably a material having no lithium ion conductivity. In the lithium secondary battery according to the present aspect, the lithium ion conductivity at 25°C of the constituent material of the ion permeation suppressing layer is less than 1 × 10⁻⁴ [S/cm], and is preferably 1 × 10⁻⁵ [S/cm] or less, more preferably 1 × 10⁻⁶ [S/cm] or less, still more preferably 1 × 10⁻⁷ [S/cm] or less, and particularly preferably 1 × 10⁻⁸ [S/cm] or less. When the lithium ion conductivity of the constituent material of the ion permeation suppressing layer is a value within these ranges, the effect of suppressing the permeation of lithium ions is particularly large. As a relative relationship between the lithium ion conductivity of each of the constituent material of the ion conductive reaction suppressing layer and the constituent material of the ion permeation suppressing layer, the lithium ion conductivity (25°C) of the constituent material of the ion conductive reaction suppressing layer is preferably 10 times or more, more preferably 100 times or more, still more preferably 300 times or more, and particularly preferably 500 times or more the lithium ion conductivity (25°C) of the constituent material of the ion permeation suppressing layer. When the lithium ion conductivity of each material is different to this extent, it can be said that the lithium ion conductivity is preferable as a constituent material of each layer.

Examples of the constituent material of the ion permeation suppressing layer include nanoparticles having no lithium ion conductivity (in the present description, nanoparticles as a constituent material of the ion permeation suppressing layer are also simply referred to as "second nanoparticles"). Since the ion permeation suppressing layer contains the second nanoparticles, a lithium secondary battery having a particularly excellent function of the ion permeation suppressing layer can be provided. The average particle diameter of the second nanoparticles is preferably 500 nm or less, more preferably 300 nm or less, still more preferably 150 nm or less, still more preferably 100 nm or less, particularly preferably 70 nm or less, and most preferably 40 nm or less. In particular, when the average particle diameter of the second nanoparticles is 40 nm or less, a lithium secondary battery particularly excellent in the effect of suppressing the growth of dendrites can be provided. The lower limit of the average particle diameter of the second nanoparticles is not particularly limited, and is usually 10 nm or more, and preferably 20 nm or more.

From the viewpoint that lithium ion conductivity is low and the growth of dendrites can be effectively suppressed, the second nanoparticles preferably contain an oxide or nitride of a metal. Examples of such oxides or nitrides of a metal include oxides or nitrides of a metal such as aluminum, silicon, magnesium, calcium, potassium, tin, sodium, boron, titanium, lead, zirconium, and yttrium, and the like. Among them, it is preferable that the second nanoparticles contain oxides of these metals, and it is more preferable that the second nanoparticles contain an oxide of aluminum (aluminum oxide; alumina) or an oxide of silicon (silicon oxide; silica), and it is still more preferable that the second nanoparticles contain alumina. Note that in a case where the ion permeation suppressing layer contains such nanoparticles, the layer may further contain a binder.

The method for forming the ion permeation suppressing layer containing the second nanoparticles as described above on the outer peripheral of the solid electrolyte layer is not particularly limited, and for example, a method can be adopted in which a slurry in which the nanoparticles and a binder as necessary are dispersed in an appropriate solvent is applied on the surface of the outer peripheral of the solid electrolyte layer, and the solvent is dried. The ion-permeation suppressing layer may be formed by bonding a coating film obtained by applying the slurry to the surface of a support such as stainless foil and drying the solvent to the surface of the perimeter of the solid electrolyte layer using a technique such as hydrostatic pressing, and then peeling the support therefrom. Note that, in some cases, a continuous layer containing any of the above-described materials may be formed by a method such as sputtering or the like instead of the form of nanoparticles to form the ion permeation suppressing layer.

In some cases, the ion permeation suppressing layer may be formed of an inorganic powder such as S-B-Na-based glass frit and the like, a resin material, or a rubber material. In particular, since the resin material and the rubber material have elasticity, for example, even when an internal stress is generated in a region where the ion permeation suppressing layer is formed, the ion permeation suppressing layer is stretched without being broken, so that occurrence of a short circuit can be effectively prevented.

Fig. 5 is a perspective view illustrating an appearance of a laminated secondary battery according to one embodiment of the present invention. As shown in Fig. 5, the flat laminated secondary battery 50 has a rectangular flat shape, and a positive electrode tab 58 and a negative electrode tab 59 for extracting electric power are extended from both sides of the battery. The power-generating element 57 is wrapped in a battery outer casing body (laminate film 52) of the laminated secondary battery 50, the periphery of the battery outer casing body is heat-sealed, and the power-generating element 57 is hermetically sealed in a state where the positive electrode tab 58 and the negative electrode tab 59 are extended to the outside.

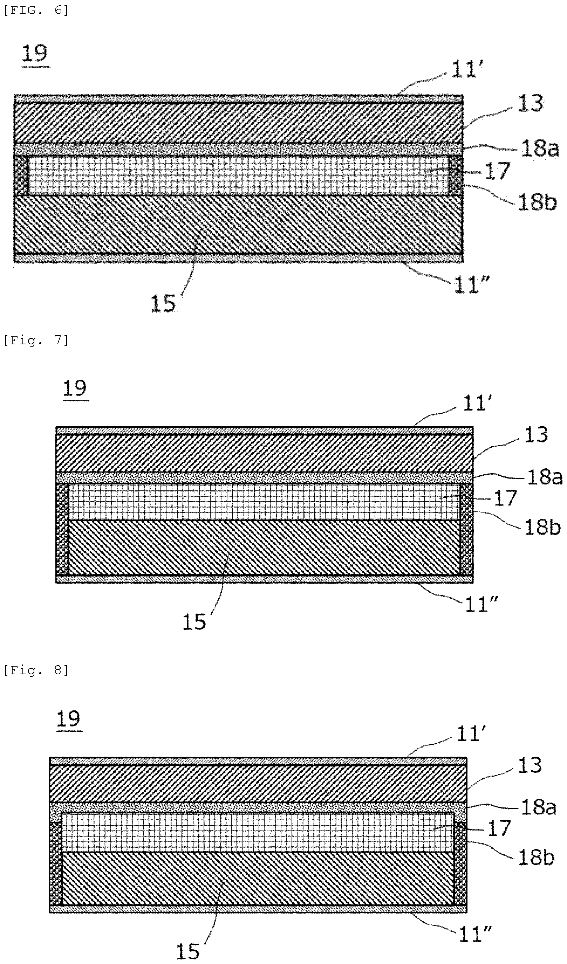

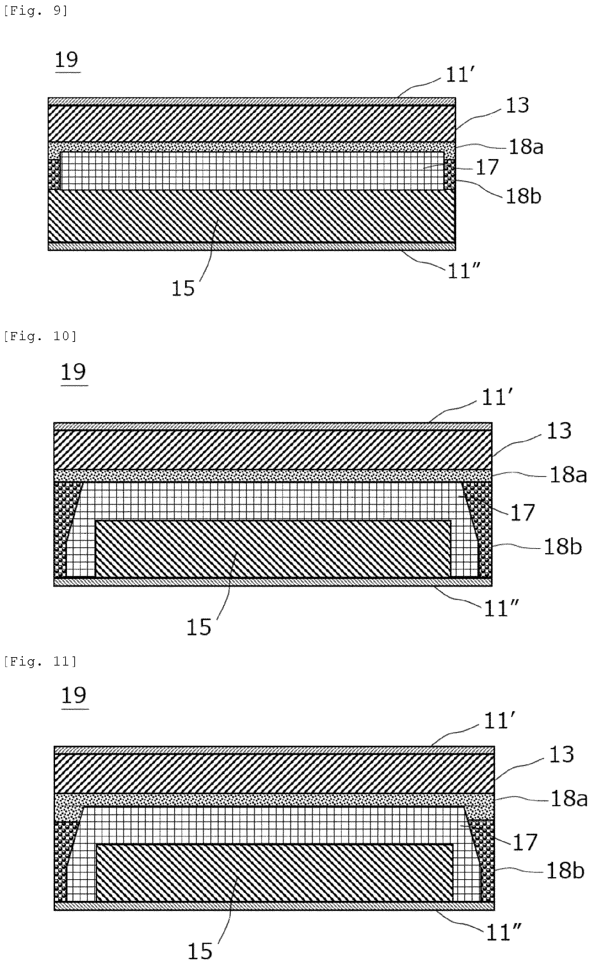

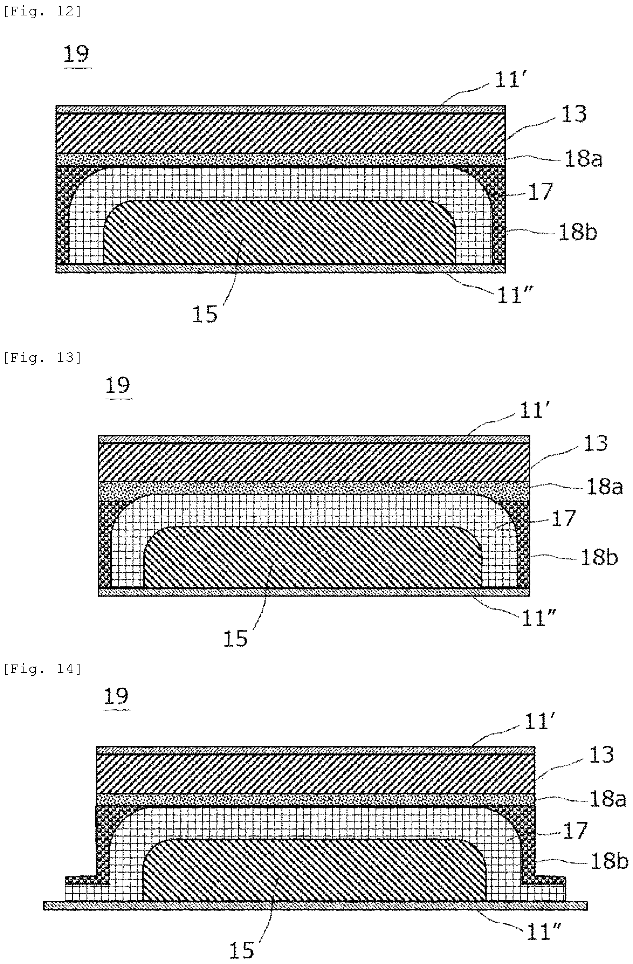

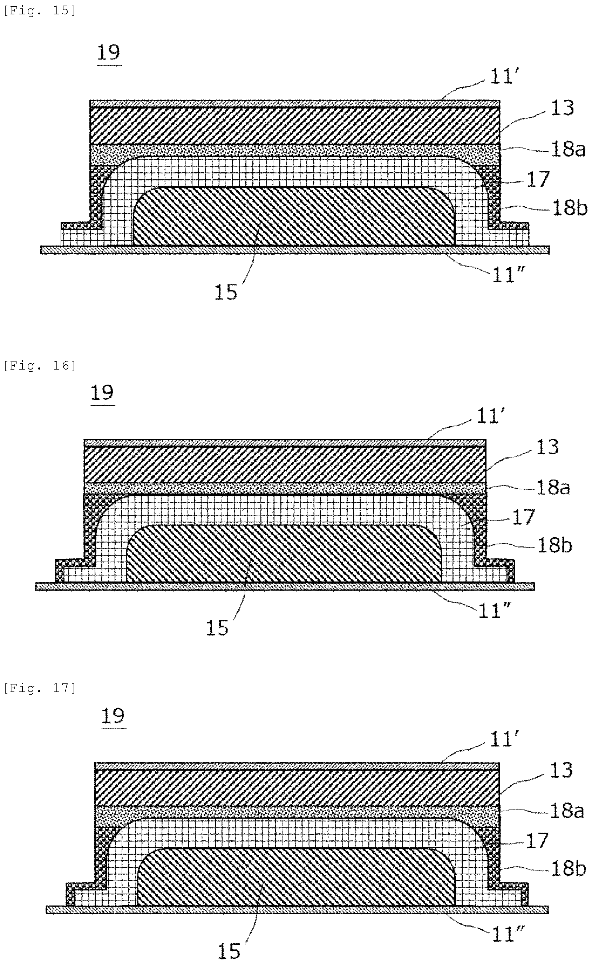

In the above description, the laminated structure and the arrangement form of each layer of the laminate type secondary battery 10a (lithium secondary battery) according to the embodiment shown in Fig. 2 have been described as an example, but the lithium secondary battery according to the present aspect can adopt various laminated structures and arrangement forms of each layer other than this. Examples of such other embodiments include embodiments shown in Figs. 6 to 8. In the embodiment shown in Fig. 6, the solid electrolyte layer 17 does not extend to the perimeter of the positive electrode active material layer 15, and is disposed only between the positive electrode active material layer 15 and the carbon black layer 18a (ion-conductive reaction-suppressing layer). Then, an alumina layer 18b (ion-permeation suppressing layer) is disposed on the perimeter of the solid electrolyte layer 17. Further, in the embodiment shown in Fig. 7, the solid electrolyte layer 17 and the positive electrode active material layer 15 are produced in the same size, and the alumina layer 18b (ion-permeation suppressing layer) is disposed adjacent to the perimeters of both layers. As described above, the configuration in which the ion-permeation suppressing layer is further adjacent to at least a part of the perimeter of the positive electrode active material layer in addition to the perimeter of the solid electrolyte layer is also one preferable form for effectively preventing the growth of dendrite and a short circuit caused thereby. Further, in the embodiment shown in Fig. 8, the carbon black layer 18a (ion-conductive reaction-suppressing layer) extends so as to cover at least a part of the perimeter of the solid electrolyte layer 17. Such a form is also one preferable form for effectively preventing the growth of dendrite and a short circuit caused thereby. In the lithium secondary battery according to the present aspect, for example, a laminated structure, an arrangement form of each layer, and the like as shown in Figs. 10 to 17 can be adopted in addition to the above-mentioned embodiments.

Although the case where the secondary battery according to the present aspect is an all-solid lithium secondary battery is described as an example, the lithium secondary battery according to the present aspect need not be an all solid type. Hence, the solid electrolyte layer may further contain a conventionally known liquid electrolyte (electrolyte solution).

The following forms are also within the scope of the present invention: lithium secondary battery of claim 1 including the feature of claim 2; the lithium secondary battery of claim 1 or 2 including the feature of claim 3; the lithium secondary battery of any one of claims 1 to 3 including the feature of claim 4; the lithium secondary battery of any one of claims 1 to 4 including the feature of claim 5; the lithium secondary battery of any one of claims 1 to 5 including the feature of claim 6; the lithium secondary battery of any one of claims 1 to 6 including the feature of claim 7; the lithium secondary battery of claim 7 including the feature of claim 8; the lithium secondary battery of claim 7 or 8 including the feature of claim 9; the lithium secondary battery of any one of claims 7 to 9 including the feature of claim 10; and the lithium secondary battery of any one of claims 1 to 10 including the feature of claim 11.

### Examples

Hereinbelow, the present invention will be described in more detail with reference to Examples. However, the technical scope of the present invention is not limited to the following Examples. Hereinafter, the operation was performed in a glove box. Further, the instruments, devices, and the like used in the glove box were sufficiently dried in advance.

### <Example 1>

### [Preparation of evaluation cell]

First, LiNi_{0.8}Mn_{0.1}Co_{0.1}O₂ as a positive electrode active material, acetylene black as a conductive aid, and a sulfide solid electrolyte (LPS (Li₂S-P₂S₅)) were weighed to have a mass ratio of 70:5:25, mixed in an agate mortar in a glove box, and then further mixed and stirred in a planetary ball mill. To 100 parts by mass of the resulting mixed powder, 2 parts by mass of styrene-butadiene rubber (SBR) was added, and mesitylene as a solvent was added to prepare a positive electrode active material slurry. Subsequently, the positive electrode active material slurry prepared above was applied onto a surface of a stainless steel (SUS) foil as a positive electrode current collector and dried to form a positive electrode active material layer (thickness: 50 um), thereby preparing a positive electrode.

To 100 parts by mass of a sulfide solid electrolyte (LPS (Li₂S-P₂S₅)), 2 parts by mass of the same styrene-butadiene rubber (SBR) was added, and mesitylene as a solvent was added to prepare a solid electrolyte slurry. Subsequently, the solid electrolyte slurry prepared above was applied onto a surface of a stainless foil as a support and dried to prepare a solid electrolyte layer (thickness: 30 um) on the surface of the stainless foil. The perimeter size of the solid electrolyte layer was set slightly larger than that of the positive electrode active material layer. Next, the positive electrode active material layer of the positive electrode prepared as described above and the solid electrolyte layer prepared as described above were superimposed in a manner of facing each other, and then bonded together by isostatic pressing (700 MPa, 25°C, 1 min) so that the outer circumference of the solid electrolyte layer covers entire outer perimeter of the positive electrode active material layer, and the stainless foil on the solid electrolyte layer side was peeled off to obtain a laminate of the positive electrode current collector and the positive electrode active material layer and the solid electrolyte layer.

On the other hand, alumina nanoparticles were prepared as a constituent material of the ion-permeation suppressing layer. An alumina nanoparticle slurry was prepared by adding 10 parts by mass of styrene-butadiene rubber (SBR) to 100 parts by mass of the alumina nanoparticles, and adding mesitylene thereto as a solvent. Subsequently, an alumina layer (thickness: 5 µm) as an ion-permeation suppressing layer was produced on the surface of the stainless foil by applying the alumina nanoparticle slurry prepared above to the surface of the stainless foil as a support, followed by drying. The average particle diameter (D50) of alumina nanoparticles contained in the alumina layer thus produced was measured by SEM observation of a cross section of the alumina layer, and found to be 40 nm.

Subsequently, the perimeter portion of the solid electrolyte layer in the laminate of the positive electrode current collector/positive electrode active material layer/solid electrolyte layer produced above and the alumina layer (ion-permeation suppressing layer) produced above were superimposed on each other so as to face each other, and then bonded to each other by hydrostatic pressing (700 MPa, 25°C, 1 min), and the stainless foil on the alumina layer side was peeled off to form an alumina layer on the entire perimeter of the solid electrolyte layer.

Further, carbon black nanoparticles were provided as a constituent material of the ion conductive reaction suppressing layer. The same styrene-butadiene rubber (SBR) was added in an amount of 10 parts by mass for 100 parts by mass of the carbon black nanoparticles, and mesitylene was added as a solvent to prepare a carbon black nanoparticle slurry. Next, the carbon black nanoparticle slurry prepared above was applied onto a surface of a stainless foil as a support and dried to prepare a carbon black layer (thickness: 5 µm) as an ion conductive reaction suppressing layer on the surface of the stainless foil. The outer peripheral size of the carbon black layer (ion conductive reaction suppressing layer) was slightly larger than the region where the positive electrode active material layer faces the negative electrode current collector as shown in Fig. 2. The average particle diameter (D50) of carbon black nanoparticles contained in the carbon black layer thus prepared was measured by SEM observation of a cross section of the carbon black layer, and found to be 60 nm.

Thereafter, an end face of the alumina layer that covers the exposed surface of the solid electrolyte layer and the entire perimeter of the solid electrolyte layer in the laminate of the positive electrode current collector/positive electrode active material layer/solid electrolyte layer with the alumina layer formed above, and the carbon black layer (ion-conductive reaction-suppressing layer) produced above were superimposed on each other so as to face each other, and then bonded to each other by hydrostatic pressing (700 MPa, 25°C, 1 min), and the stainless foil on the carbon black layer side was peeled off to form a carbon black layer on the exposed surface of the solid electrolyte layer. Finally, a stainless foil as a negative electrode current collector was disposed in a manner of covering the carbon black layer and the alumina layer formed as described above, and an evaluation cell (lithium-precipitation type all-solid-state lithium secondary battery) in the form shown in Fig. 2 was prepared except that the negative electrode active material layer was not present.

### <Example 2>

An evaluation cell (all-solid-state lithium secondary battery of lithium-deposition type) having the form shown in Fig. 6 except that the negative electrode active material layer was not present was produced in the same manner as in Example 1 described above. When the evaluation cell was produced, the positive electrode current collector, the positive electrode active material layer, the solid electrolyte layer, the alumina layer, the carbon black layer, and the negative electrode current collector were formed (laminated) in this order.

### <Example 3>

An evaluation cell (all-solid-state lithium secondary battery of lithium-deposition type) having the form shown in Fig. 7 except that the negative electrode active material layer was not present was produced in the same manner as in Example 1 described above. When the evaluation cell was produced, the positive electrode current collector, the positive electrode active material layer, the solid electrolyte layer, the alumina layer, the carbon black layer, and the negative electrode current collector were formed (laminated) in this order.

### <Example 4>

An evaluation cell (all-solid-state lithium secondary battery of lithium-deposition type) having the form shown in Fig. 8 except that the negative electrode active material layer was not present was produced in the same manner as in Example 1 described above. When the evaluation cell was produced, the positive electrode current collector, the positive electrode active material layer, the solid electrolyte layer, the alumina layer, the carbon black layer, and the negative electrode current collector were formed (laminated) in this order.

### <Comparative Example 1>

An evaluation cell (lithium-precipitation type all-solid-state lithium secondary battery) of this Comparative Example was prepared by the same method as in Example 1 described above except that neither the ion conductive reaction suppressing layer (carbon black layer) nor the ion permeation suppressing layer (alumina layer) was formed.

### <Comparative Example 2>

An evaluation cell (all-solid-state lithium secondary battery of lithium-deposition type) of this comparative example was produced in the same manner as in Example 2 described above except that neither the ion-conductive reaction-suppressing layer (carbon black layer) nor the ion-permeation suppressing layer (alumina layer) was formed.

### <Comparative Example 3>

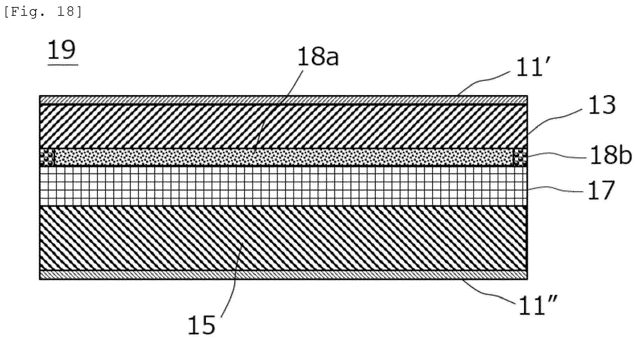

An evaluation cell (all-solid-state lithium secondary battery of lithium-deposition type) having the form shown in Fig. 18 except that the negative electrode active material layer was not present was produced in the same manner as in Example 1 described above. When the evaluation cell was produced, first, the positive electrode current collector, the positive electrode active material layer, and the solid electrolyte layer were formed in this order. Subsequently, an alumina layer was formed while the exposed surface of the solid electrolyte layer was masked, and then the mask was removed, and a carbon black layer and a negative electrode current collector were formed (laminated) in this order.

### [Evaluation of evaluation cell (evaluation of presence or absence of short circuit caused by dendrites)]

A positive electrode lead and a negative electrode lead were connected to each of the positive electrode current collector and the negative electrode current collector of the evaluation cell prepared above, respectively, and a charge treatment was performed at a current density of 3 [mA/cm²], 3.5 [mA/cm²], or 4 [mA/cm²] from SOC 0% in a thermostatic bath at 60°C, and the presence or absence of a short circuit of the evaluation cell within 30 minutes was examined. It was determined that a short circuit occurred when the voltage of the evaluation cell decreased during the charging process. In addition, the evaluation cell determined to have an occurrence of a short circuit was disassembled, and the inside of the cell was observed. As a result, generation of dendrites due to lithium metal was confirmed in all of the evaluation cells. The results were shown in Table 1 below. Among the evaluation results shown in Table 1, those in which no short circuit occurs are indicated by "∘", and those in which a short circuit occurs are indicated by "×".

**[Table 1]**

| | Ion-conductive reaction-suppressing layer (carbon black layer) | | Ion-permeation suppressing layer (alumina layer) | | Extension of solid electrolyte layer to perimeter of positive electrode active material layer | Evaluation as to whether short circuit occurs | | |
|---|---|---|---|---|---|---|---|---|
| | With or without | D50 [nm] | With or without | D50 [nm] | | Current density 3 mA/cm² | Current density 3.5 mA/ cm² | Current density 4 mA/cm² |
| Example 1 | With | 60 | With | 40 | With | ○ | ○ | ○ |
| Example 2 | With | 60 | With | 40 | Without | ○ | ○ | × |
| Example 3 | With | 60 | With | 40 | Without | ○ | ○ | × |
| Example 4 | With | 60 | With | 40 | Without | ○ | ○ | × |
| Comparative Example 1 | Without | - | Without | - | With | × | × | × |
| Comparative Example 2 | Without | - | Without | - | Without | × | × | × |
| Comparative Example 3 | With | 60 | With*¹⁾ | 40 | Without | ○ | × | × |

| | | | | | | | | |
|---|---|---|---|---|---|---|---|---|
| *1) The Ion-permeation suppressing layer was disposed on the perimeter of the carbon black layer. | | | | | | | | |

From the results shown in Table 1, it is found that according to an aspect of the present invention, in a lithium secondary battery including a power generating element of lithium-deposition type, by providing the ion-conductive reaction-suppressing layer at the side of the negative electrode current collector of the solid electrolyte layer and disposing the ion-permeation suppressing layer adjacent to the perimeter of the solid electrolyte layer, the growth of dendrite can be more certainly suppressed as compared with a case where these layers are not disposed. In particular, in Example 1 in which the solid electrolyte layer extends to the perimeter of the positive electrode active material layer in addition to disposing the ion-conductive reaction-suppressing layer and the ion-permeation suppressing layer, it is also found that the generation of dendrite was suppressed even by the current treatment at a higher current density.

This application is based on Japanese Patent Application No. 2021-202389 filed on December 14, 2021, the contents of which are incorporated herein by reference in their entirety.

## Claims

1. A lithium secondary battery comprising
a power-generating element comprising:
a positive electrode in which a positive electrode active material layer containing a positive electrode active material capable of occluding and releasing lithium ions is disposed on a surface of a positive electrode current collector;
a negative electrode that comprises a negative electrode current collector and in which lithium metal is precipitated on the negative electrode current collector during charging; and
a solid electrolyte layer that is interposed between the positive electrode and the negative electrode and contains a solid electrolyte, wherein
an ion conductive reaction suppressing layer that has lithium ion conductivity and suppresses reaction between the lithium metal and the solid electrolyte is provided on at least a part of a region where the positive electrode active material layer faces the negative electrode current collector on a main surface of the solid electrolyte layer facing the negative electrode current collector, and
an ion permeation suppressing layer that suppresses permeation of lithium ions is provided so as to be adjacent to at least a part of the perimeter of the solid electrolyte layer.

2. The lithium secondary battery according to claim 1, wherein the solid electrolyte layer extends so as to cover at least a part of a perimeter of the positive electrode active material layer.

3. The lithium secondary battery according to claim 1 or 2, wherein the ion-permeation suppressing layer is further adjacent to at least a part of a perimeter of the positive electrode active material layer.

4. The lithium secondary battery according to claim 1 or 2, wherein the ion-conductive reaction-suppressing layer extends so as to cover at least a part of a perimeter of the solid electrolyte layer.

5. The lithium secondary battery according to claim 1 or 2, wherein lithium ion conductivity of a constituent material of the ion conductive reaction suppressing layer is 100 times or more lithium ion conductivity of a constituent material of the ion permeation suppressing layer.

6. The lithium secondary battery according to claim 1 or 2, wherein lithium ion conductivity of a constituent material of the ion permeation suppressing layer at 25°C is 1 × 10⁻⁵ [S/cm] or less.

7. The lithium secondary battery according to claim 1 or 2, wherein the ion conductive reaction suppressing layer contains first nanoparticles having lithium ion conductivity, and the ion permeation suppressing layer contains second nanoparticles having no lithium ion conductivity.

8. The lithium secondary battery according to claim 7, wherein an average particle diameter of the first nanoparticles is 60 nm or less and an average particle diameter of the second nanoparticles is 40 nm or less .

9. The lithium secondary battery according to claim 8, wherein the first nanoparticles contain one or two or more kinds of elements selected from the group consisting of carbon, gold, platinum, palladium, silicon, silver, aluminum, bismuth, tin, and zinc.

10. The lithium secondary battery according to claim 8, wherein the second nanoparticles contain an oxide or nitride of a metal.

11. The lithium secondary battery according to claim 1 or 2, wherein the ion-conductive reaction-suppressing layer is provided in an area including the entire of the area, and the ion-permeation suppressing layer is provided over the entire perimeter of the solid electrolyte layer.
